(19)

**Europäisches Patentamt**
**European Patent Office**
**Office européen des brevets**

(11) **EP 4 697 843 A1**

(12) **EUROPEAN PATENT APPLICATION**
published in accordance with Art. 153(4) EPC

(43) Date of publication:
**18.02.2026 Bulletin 2026/08**

(21) Application number: **24789123.7**

(22) Date of filing: **15.04.2024**

(51) International Patent Classification (IPC):
$H04W\ 72/53^{(2023.01)}$    $H04W\ 72/12^{(2023.01)}$
$H04W\ 72/02^{(2009.01)}$    $H04W\ 72/04^{(2023.01)}$
$H04W\ 72/25^{(2023.01)}$    $H04W\ 72/542^{(2023.01)}$
$H04W\ 72/56^{(2023.01)}$    $H04W\ 28/26^{(2009.01)}$
$H04L\ 27/26^{(2006.01)}$    $H04W\ 4/40^{(2018.01)}$

(52) Cooperative Patent Classification (CPC):
**H04L 27/26; H04W 4/40; H04W 28/26;**
**H04W 72/02; H04W 72/04; H04W 72/12;**
**H04W 72/25; H04W 72/53; H04W 72/542;**
**H04W 72/56**

(86) International application number:
**PCT/KR2024/095707**

(87) International publication number:
**WO 2024/215183 (17.10.2024 Gazette 2024/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.04.2023 US 202363459213 P**
**14.04.2023 US 202363459578 P**
**24.04.2023 KR 20230053565**
**24.04.2023 US 202363461589 P**
**25.04.2023 US 202363461892 P**
**19.05.2023 KR 20230065033**
**19.05.2023 US 202363467905 P**
**22.05.2023 KR 20230065658**

(71) Applicant: **LG ELECTRONICS, INC.**
**Seoul 07336 (KR)**

(72) Inventors:
• **HWANG, Daesung**
**Seoul 06772 (KR)**
• **LEE, Seungmin**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **RESOURCE EXCLUSION METHOD AND APPARATUS FOR COEXISTENCE BETWEEN DIFFERENT RATS**

(57)    Provided are a method by which a first device performs wireless communication and an apparatus supporting same. The first device may: acquire information related to a resource pool; acquire first priority information for sidelink transmission; receive, from a second device, long term evolution (LTE) sidelink control information (SCI) including resource reservation information and second priority information; and determine a set of candidate resources for the sidelink transmission.

FIG. 11

```
┌─────────────────────────────────────────────┐
│  obtaining information related to resource pool │──── S1110
└─────────────────────────────────────────────┘
                      │
┌─────────────────────────────────────────────┐
│      obtaining first priority information       │──── S1120
│           for sidelink transmission             │
└─────────────────────────────────────────────┘
                      │
┌─────────────────────────────────────────────┐
│          receiving, from second device,         │──── S1130
│ LTE SCI including resource reservation information│
│         and second priority information          │
└─────────────────────────────────────────────┘
                      │
┌─────────────────────────────────────────────┐
│       determining set of candidate resources    │──── S1140
│             for sidelink transmission           │
└─────────────────────────────────────────────┘
```

**Description**

**TECHNICAL FIELD**

This disclosure relates to a wireless communication system.

**BACKGROUND ART**

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

**DISCLOSURE**

**TECHNICAL SOLUTION**

Based on an embodiment of the present disclosure, a method for performing wireless communication by a first device may be provided. For example, the method may comprise: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

Based on an embodiment of the present disclosure, a non-transitory computer-readable storage medium storing instructions may be provided. For example, the instructions, when executed, may cause a first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

## BRIEF DESCRIPTION OF THE DRAWINGS

FIG. 1 shows a communication structure providable in a 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows an example of an AGC issue caused by NR PSFCH transmission and reception.

FIG. 10 shows a method for excluding resource(s) based on an LTE reserved resource overlapping with a PSFCH occasion and an RSRP threshold value, based on an embodiment of the present disclosure.

FIG. 11 shows a method for a first device to perform wireless communication, based on an embodiment of the present disclosure.

FIG. 12 shows a method for a second device to perform wireless communication, based on an embodiment of the present disclosure.

FIG. 13 shows a communication system 1, based on an embodiment of the present disclosure.

FIG. 14 shows wireless devices, based on an embodiment of the present disclosure.

FIG. 15 shows a signal process circuit for a transmission signal, based on an embodiment of the present disclosure.

FIG. 16 shows another example of a wireless device, based on an embodiment of the present disclosure.

FIG. 17 shows a hand-held device, based on an embodiment of the present disclosure.

FIG. 18 shows a vehicle or an autonomous vehicle, based on an embodiment of the present disclosure.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

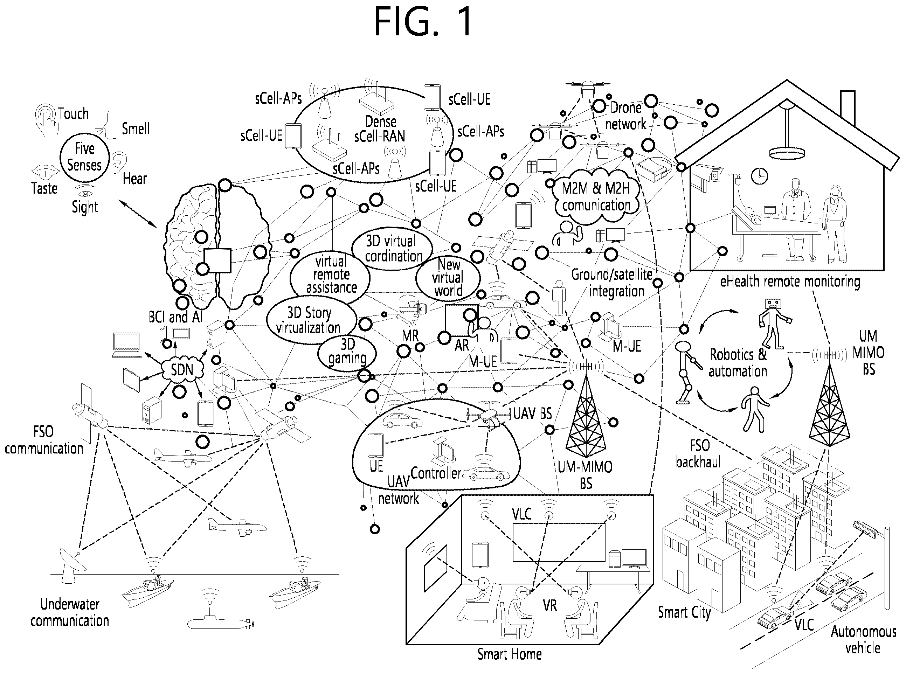

FIG. 1 shows a communication structure providable in a 6G system, based on an embodiment of the present disclosure. The embodiment of FIG. 1 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

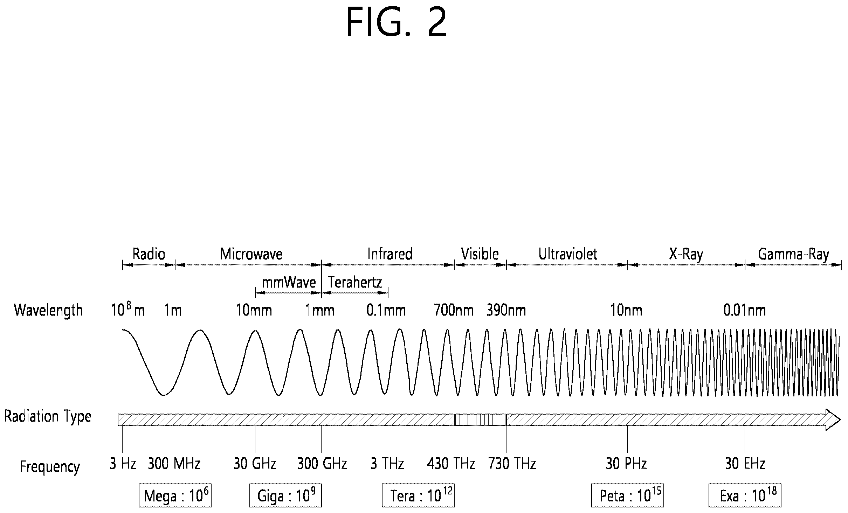

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

- Advanced air mobility (AAM): An AAM is a superordinate concept of urban air mobility (UAM), which is air transportation that can be used in an urban area, and may refer to a means of transportation that includes movement between the urban area and a regional hub.

- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

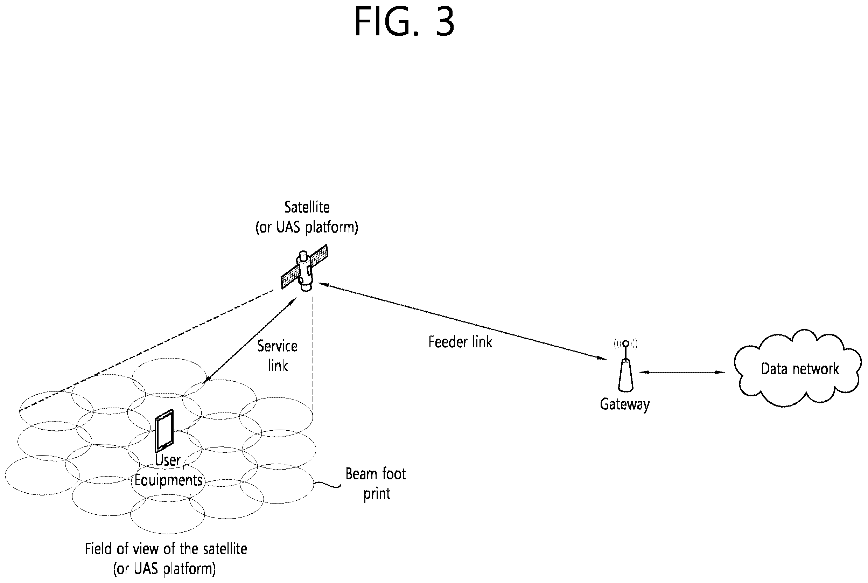

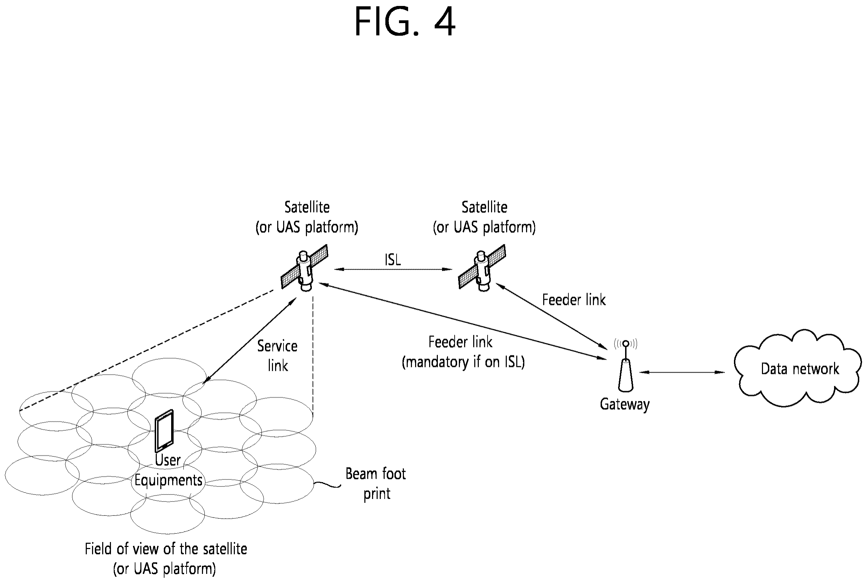

- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

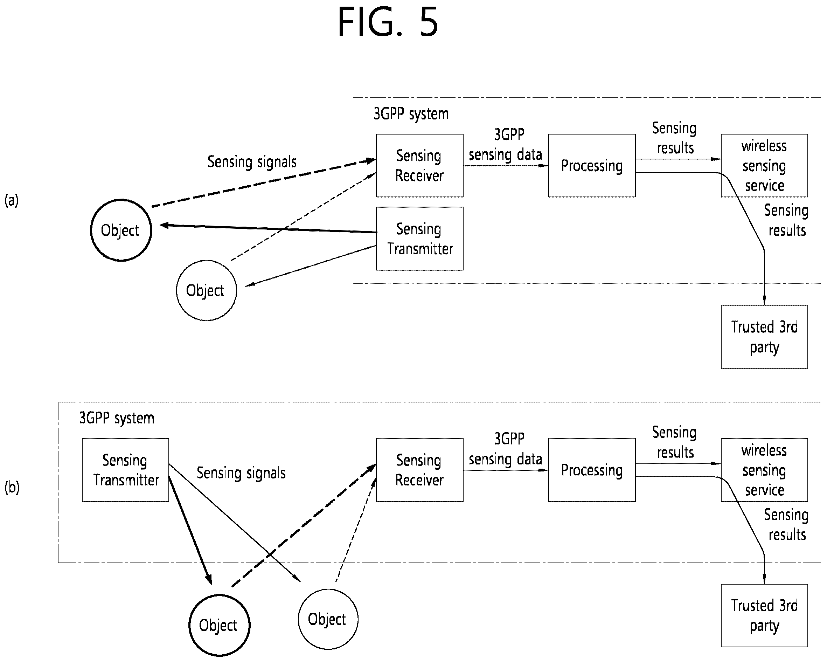

- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{trame,u}_{slot}$), and a number of slots per subframe ($N^{subtrame,u}_{slot}$) based on an SCS configuration (u), in a case where a normal CP or an extended CP is used.

[Table 2]

| CP type | SCS (15*2ᵘ) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

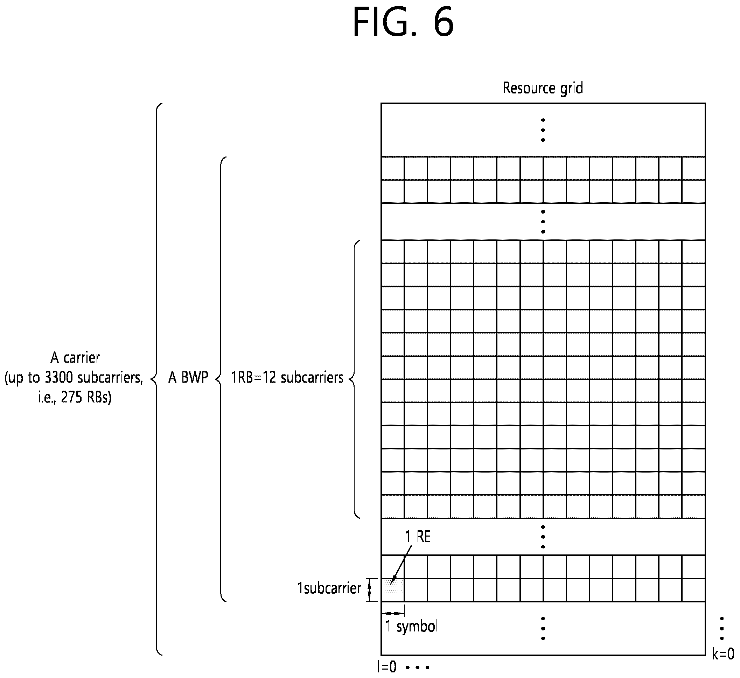

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

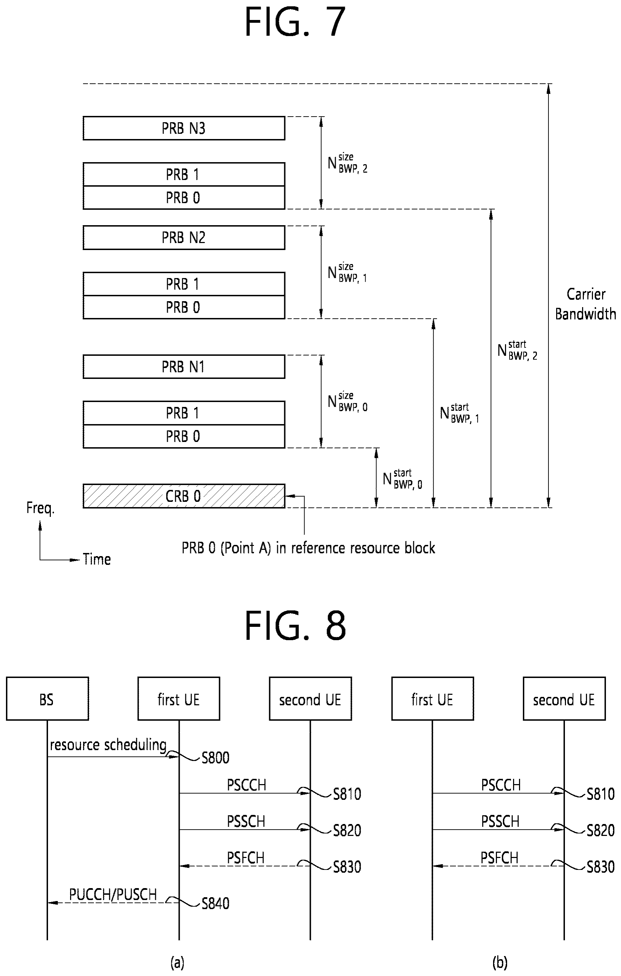

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

For example, the UE may generate an S-SS/PSBCH block (i.e., S-SSB), and the UE may transmit the S-SS/PSBCH block (i.e., S-SSB) by mapping it on a physical resource. For example, the time-frequency structure of the S-SS/PSBCH block may be as follows.

In the time domain, an S-SS/PSBCH block may consist of $N^{S\text{-}SSB}_{symb}$ OFDM symbols, numbered in increasing order from 0 to $N^{S\text{-}SSB}_{symb}-1$ within the S-SS/PSBCH block, where S-PSS, S-SSS, and PSBCH with associated DM-RS may be mapped to symbols as given by Table 3. The number of OFDM symbols in an S-SS/PSBCH block may be $N^{S\text{-}SSB}_{symb}=13$ for normal cyclic prefix and $N^{S\text{-}SSB}_{symb}=11$ for extended cyclic prefix. The first OFDM symbol in an S-SS/PSBCH block may be the first OFDM symbol in the slot.

In the frequency domain, an S-SS/PSBCH block may consist of 132 contiguous subcarriers with the subcarriers numbered in increasing order from 0 to 131 within the sidelink S-SS/PSBCH block. The quantities k and l may represent the frequency and time indices, respectively, within one sidelink S-SS/PSBCH block.

[Table 3]

| Channel or signal | OFDM symbol number l relative to the start of an S-SS/PSBCH block | Subcarrier number k relative to the start of an S-SS/PSBCH block |
|---|---|---|
| S-PSS | 1, 2 | 2, 3, ..., 127, 128 |
| S-SSS | 3, 4 | 2, 3, ..., 127, 128 |
| Set to zero | 1, 2, 3, 4 | 0, 1, 129, 130, 131 |
| PSBCH | 0, 5, 6, ..., $N^{S\text{-}SSB}_{symb}-1$ | 0, 1, ..., 131 |
| DM-RS for PSBCH | 0, 5, 6, ..., $N^{S\text{-}SSB}_{symb}-1$ | 0, 4, 8, ..., 128 |

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

For example, the 1st-stage SCI format may include a SCI format 1-A and/or a SCI format 1-B, and the 2nd-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits

- HARQ feedback enabled/disabled indicator - 1 bit
- Cast type indicator - 2 bits as defined in Table 4
- CSI request - 1 bit

[Table 4]

| Value of Cast type indicator | Cast type |
| --- | --- |
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.

(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \le k < T'_{max}$) has a PSFCH transmission occasion resource if k mod $N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots associated with a PSFCH slot that is less than or equal to $N^{PSFCH}_{PSSCH}$, the UE allocates the $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot}-1]$ PRBs from the $M_{PRB,set}^{PSFCH}$ PRBs to slot i among the PSSCH slots associated with the PSFCH slot and sub-channel j, where $M^{PSFCH}_{subch,slot} = M^{PSFCH}_{PRB,set}/(N_{subch} \cdot N^{PSFCH}_{PSSCH})$, $0 \leq i < N^{PSFCH}_{PSSCH}$, $0 \leq j \leq N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type} = 1$ and the $M^{PSFCH}_{subch,slot}$ PRBs are associated with the starting sub-channel of the corresponding PSSCH
- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 5.

[Table 5]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The UE applies one cyclic shift from a cyclic shift pair to a sequence used for the PSFCH transmission.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.

- it is up to UE implementation to determine the subset of resources as requested by higher layers before or after the slot $r_i''$ - $T_3$, where $r_i''$ is the slot with the smallest slot index among ($r_0$, $r_1$, $r_2$, ...) and ($r'_0$, $r'_1$, $r'_2$, ...), and $T_3$ is equal to $T^{SL}_{proc,1}$. Herein, $T^{SL}_{proc,1}$ is defined as the number of slots based on SCS, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j$ = $prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.
Notation:
($t'^{SL}_0$, $t'^{SL}_1$, $t'^{SL}_2$, ...) denotes the set of slots which belongs to the sidelink resource pool.
For example, the UE may select a set of candidate resources ($S_A$) based on Tables 6 to 9. For example, if resource (re)selection is triggered, the UE may select a set of candidate resources ($S_A$) based on Tables 6 to 9. For example, if re-evaluation or pre-emption is triggered, the UE may select a set of candidate resources ($S_A$) based on Tables 6 to 9.

[Table 6]

| |
|---|
| 1) A candidate single-slot resource for transmission $R_{x,y}$ is defined as a set of $L_{subCH}$ contiguous sub-channels with sub-channel $x+j$ in slot $t'^{SL}_y$ where j = 0,..., $L_{subCH}$ - 1. The UE shall assume that any set of $L_{subCH}$ contiguous sub-channels included in the corresponding resource pool within the time interval [n + $T_1$, n + $T_2$] correspond to one candidate single-slot resource, where <br><br> - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP; <br> - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots). <br> The total number of candidate single-slot resources is denoted by $M_{total}$. <br><br> 2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. <br><br> 3) The internal parameter $Th(p_i,p_j)$ is set to the corresponding value of RSRP threshold indicated by the i-th field in *sl-Thres-RSRP-List,* where i = $p_i + (p_j - 1) * 8$. <br><br> 4) The set $S_A$ is initialized to the set of all the candidate single-slot resources. |

Referring to Table 6, in step 1, the UE may select/determine a time interval (e.g., a selection window) for resource selection. In step 2, the UE may select/determine a sensing window, and the UE may monitor slots within the sensing window. In step 3, the UE may determine an RSRP threshold. In step 4, the UE may initialize the set $S_A$.

[Table 7]

5) The UE shall exclude any candidate single-slot resource $R_{x,y}$ from the set $S_A$ if it meets all the following conditions:

 - the UE has not monitored slot $t'^{SL}_m$ in Step 2.

 - for any periodicity value allowed by the higher layer parameter *sl-ResourceReservePeriodList* and a hypothetical SCI format 1-A received in slot $t'^{SL}_m$ with *'Resource reservation period* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

Referring to Table 7, in step 5, the UE may exclude candidate single-slot resource(s) from the set $S_A$. In step 5a, if the number of candidate single-slot resources remaining in the set $S_A$ is less than a threshold, the UE may initialize the set $S_A$ to a set of all candidate single-slot resources, as in step 4.

[Table 8]

6) The UE shall exclude any candidate single-slot resource $R_{x,y}$ from the set $S_A$ if it meets all the following

 a) the UE receives an SCI format 1-A in slot $t'^{SL}_m$, and *'Resource reservation period'* field, if present, and *"Priority"* field in the received SCI format 1-A indicate the values $P_{rsvp\_RX}$ and *$prio_{RX}$*, respectively;
 b) the RSRP measurement performed, for the received SCI format 1-A, is higher than *$Th(prio_{RX}, prio_{TX})$*;
 c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q$=1, 2, ..., Q and $j$=0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set $\left( t'^{SL}_0, t'^{SL}_1, \ldots, t'^{SL}_{T'_{max}-1} \right)$, otherwise slot $t'^{SL}_{n'}$ is the first slot after slot $n$ belonging to the set $\left( t'^{SL}_0, t'^{SL}_1, \ldots, t'^{SL}_{T'_{max}-1} \right)$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4. The UE shall report set $S_A$ to higher layers.

Referring to Table 8, in step 6, the UE may exclude candidate single-slot resource(s) from the set $S_A$. In step 7, if the number of candidate single-slot resources remaining in the set $S_A$ is less than a threshold, the UE may increase the RSRP threshold by 3 dB, and the procedure may continue from step 4.

[Table 9]

The UE shall report set $S_A$ to higher layers.
If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

 - $r'_i$ is not a member of $S_A$, and

 - $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and
 - the associated priority *$prio_{RX}$*, satisfies one of the following conditions:
   - *sl-PreemptionEnable* is provided and is equal to 'enabled' and *$prio_{TX} > prio_{RX}$*
   - *sl-PreemptionEnable* is provided and is not equal to 'enabled', and *$prio_{RX} < prio_{pre}$* and *$prio_{TX} > prio_{RX}$*

Referring to Table 9, the UE may report the set $S_A$ to a higher layer. For example, if re-evaluation or pre-emption is triggered, the UE may report resource(s) subject to re-evaluation or resource(s) subject to pre-emption based on Table 9.

Meanwhile, in the next-generation system, the UE may be allowed to transmit and/or receive sidelink channels/signals based on different RATs (e.g., LTE and/or NR) on a single carrier or cell. In the embodiment(s) of the present disclosure, the above situation can be extended to a case where the UE simultaneously performs sidelink transmit and receive operations based on a plurality of different RATs with a single RF device and/or a single baseband (BB) device. Meanwhile, depending on RAT, waveform and/or signal generation method and/or direct current (DC) location and/or subcarrier spacing (SCS) and/or subcarrier offset and/or CP length, etc. for sidelink transmission and reception or transmission and reception for PSCCH and/or PSSCH may be different. More specifically, in the case of LTE sidelink, SC-FDMA or DFT-PRECODED OFDM scheme may be used, and the SCS may be 15 kHz, and the DC location may have a subcarrier offset with 7.5 kHz in the center of the system bandwidth, and the CP length can be normal CP and extended CP. On the other hand, in the case of NR sidelink, OFDM or CP-OFDM scheme may be used, and the SCS may be 15 kHz, 30 kHz, 60 kHz, 120 kHz, etc. depending on the (pre-)configuration, and the DC location may be a specific subcarrier location within a SL BWP or an RB grid or a specific location outside the SL BWP or the RB grid depending on the (pre-)configuration, and the subcarrier offset can be +7.5kHz, 0kHz, -7.5kHz, depending on the (pre-)configuration, and the CP length can be normal CP, and the CP length can be extended CP only if the SCS is 60kHz. In addition, in the case of LTE sidelink, all symbols in a subframe or a slot may be available for SL communication, whereas in the case of NR sidelink, only a symbol period equal to the number of SL symbols (hereinafter referred to as SL_SYMBOL_LENGTH) in a slot from a starting SL symbol index (hereinafter referred to as SL_SYMBOL_START) configured in the (pre-)configuration may be available for SL communication.

Meanwhile, if an LTE subframe and an NR slot overlap, an automatic gain control (AGC) issue may arise due to PSFCH transmission and reception within the NR slot. Specifically, for example, if the UE performs AGC on the first symbol within the LTE SL subframe, and then PSFCH transmission and reception occurs within the NR SL slot, some signals (exceeding the maximum received power configured by AGC) may be clipped due to a sudden increase in the total received power.

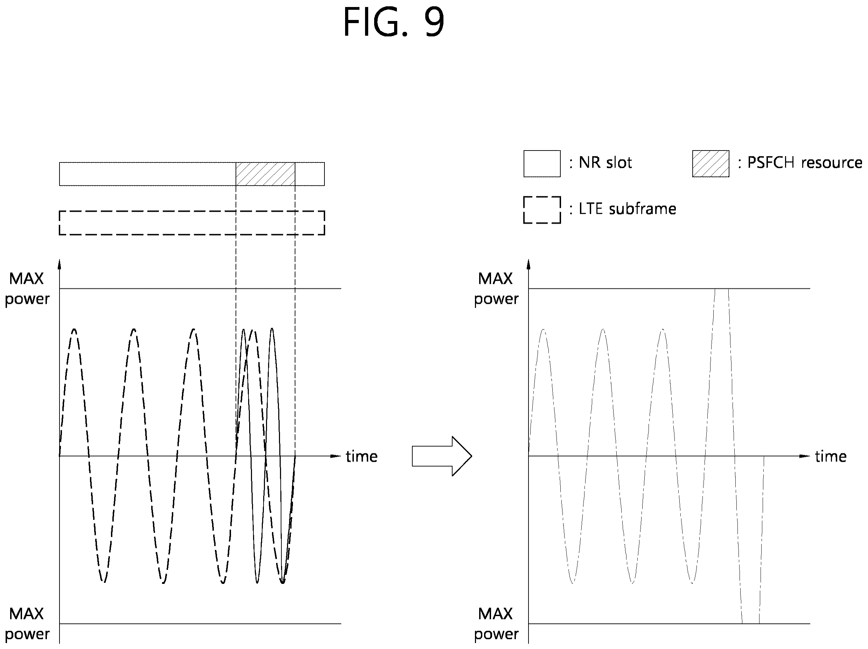

FIG. 9 shows an example of an AGC issue caused by NR PSFCH transmission and reception. Referring to FIG. 9, if the UE that has already performed AGC for LTE SL reception additionally performs NR PSFCH reception during LTE SL reception, some signals may exceed the maximum received power configured by the AGC. This may result in clipping of some signals. Based on various embodiments of the present disclosure, a resource exclusion method for coexistence between different RATs and a device supporting the same are described. For convenience of explanation, the description focuses on the coexistence of LTE SL and NR SL, but the technical concepts of the present disclosure are not limited thereto. The technical concepts of the present disclosure can also be applied to cases where communications based on different RATs coexist.

For example, in the case of transmitting and/or receiving sidelink channels/signals based on different RATs (e.g., LTE and/or NR) in a single carrier or cell, the UE needs to avoid resources occupied by the LTE SL operation when performing the NR SL operation. That is, the UE may select NR SL transmission resource(s) to avoid resources reserved for the LTE SL operation under certain condition(s) (e.g., if an RSRP measurement value is higher than an RSRP threshold, by comparing the RSRP measurement value with the RSRP threshold). For example, the UE may be provided with both configurations for the LTE SL operation (e.g., resource pool configuration, carrier information, RB grid information, etc.) and the NR SL operation (e.g., resource pool configuration, SL BWP configuration, carrier information, RB grid information, DC information, etc.) from the base station or through (pre-)configuration. This is to perform resource (re)selection based on LTE SCI and/or LTE DCI and/or NR SCI and/or NR DCI.

For example, if a resource pool for LTE SL operation and a resource pool for NR SL operation overlap, it is necessary to define how the UE performs a mutual resource exclusion procedure during resource selection. In particular, if an SCS for LTE SL is different from an SCS for NR SL and/or if a subcarrier offset for LTE SL is different from a subcarrier offset for NR SL, RB boundaries may not be aligned with each other, and interference between adjacent RBs may be high. More specifically, in the above situation, the main lobe and/or side lobe of a waveform may cause high interference in such a manner as to intrude even when the frequency-domain locations are adjacent without overlapping in an RB grid having a relatively small SCS. In addition, in the case where the SCS is different, the number of NR SL slots overlapping with LTE SL subframes may be plural. In the embodiment(s) of the present disclosure, for convenience, a case where the boundaries of an LTE subframe and an NR subframe or slot are aligned/matched or the gap between the LTE subframe and the NR subframe or slot is less than or equal to a certain level will be described.

For example, in the case of resource (re)selection for NR SL, available resource(s) or selected transmission resource(s) may be determined to avoid (always or based on RSRP measurement values or based on a combination of priority values, etc.) reserved resource(s) for LTE SL and/or transmission (scheduled) resource(s) of the same UE for LTE SL and/or resource(s) associated with non-monitored subframes for LTE SL. For example, an LTE SL resource reservation period and/or a period repetition number Q value may be used to derive LTE SL periodic resources. For example, the value of Q may be determined based on an SCI reception subframe location indicating reserved resources for LTE SL based on LTE SL and/or a hypothetical SCI reception subframe location according to non-monitored subframes and/or a resource (re)selection triggering time based on LTE SL and/or an LTE SL resource reservation period value. For example, if an index (in terms of physical subframes or logical subframes) of the SCI reception subframe location indicating the reserved resource for LTE SL and/or the hypothetical SCI reception subframe location according to non-monitored subframes is m, and an index (in terms of physical subframes or logical subframes) of the resource (re)selection triggering subframe location based on LTE SL or the subframe location belonging to the resource pool including the time is n', and P_rsvp_RX is a resource reservation period (in msec) divided by 100, and P_step is a constant value according to the ul-dl-TDD configuration, and P_rsvp_RX*P_step is a reference resource reservation value, and the value of P_rsvp_RX is less than 1 based on LTE SL, and/or the value of n'-m is less than or equal to P_step*P_rsvp_RX (a reference LTE SL reservation period value), the value of Q may be the reciprocal of P_rsvp and/or a value obtained by dividing T_scal/100 by the value of P_rsvp_RX and/or a value obtained by dividing T_scal by the reference reservation period value, and otherwise the value of Q may be 1.

For example, the value of T_scal may be a value of T_2 for determining a size of a resource selection window and/or an end of the resource selection window for NR SL resource (re)selection (e.g., a value determined by the UE between a (pre-)configured T_2,min and a PDB value for resource (re)selection) and/or a value obtained by multiplying or dividing the above value by a scaling value according to an SCS of NR SL (e.g., $2^u$, where u is 0 for 15 kHz SCS, 1 for 30 kHz SCS, and 2 for 60 kHz SCS). For example, the value of T_scal may be a (pre-)configured value, the unit of which may be msec and/or the number of (physical or logical) subframes and/or the number of (physical or logical) slots.

For example, the value of Q may be determined based on an SCI reception subframe location indicating a reserved resource for LTE SL based on LTE SL and/or a hypothetical SCI reception subframe location according to non-monitored subframes and/or a location of an NR SL slot overlapping with the LTE SL subframe and/or a resource (re)selection triggering time based on NR SL and/or a NR SL resource selection window size and/or a value of T_2 and/or an LTE SL resource reservation period value.

For example, if an index (in terms of physical slots or logical slots) of NR SL slots overlapping with an SCI reception subframe location indicating a reserved resource for LTE SL and/or a hypothetical SCI reception subframe location according to non-monitored subframes and/or an earlier slot among them and/or a later slot among them is m_NR, and an index (in terms of physical slots or logical slots) of a resource (re)selection triggering slot location based on NR SL or a slot location belonging to a resource pool including the time is n'_NR, and the value of P_rsvp_RX*P_step for LTE SL or P_rsvp_RX*100 or a reference LTE SL reservation period value and/or a value obtained by adding 1 to the value or subtracting 1 from the value and/or a value obtained by adding or subtracting $2^u$-1 is less than T_scal, and/or the value of n'_NR-m_NR is less than or equal to a value obtained by converting the reference LTE SL reservation period value using the number of logical slots for NR, and/or a location of an NR SL slot for n'_NR is the same as or later than a location of NR SL slots overlapping with the subframe location to which the reference LTE SL reservation period value is applied based on the LTE SL resource pool from the SCI reception subframe location indicating the reserved resource for LTE SL and/or the hypothetical SCI reception subframe location according to the non-monitored subframes and/or a location of the earliest slot among them and/or the latest slot among them, the value of Q may be a ceiling value of a value obtained by dividing the value of T_scal by the reference LTE SL reservation period value, and otherwise the value of Q may be 1. For example, in the case where there are multiple NR SL slots overlapping with the subframe location to which the reference LTE SL reservation period value is applied based on the LTE SL resource pool from the SCI reception subframe location indicating the reserved resource for LTE SL and/or the hypothetical SCI reception subframe location according to the non-monitored subframes, the value of Q may be determined differently for each NR SL slot, and/or in the case where the NR SL slot is the same as or later than the location of the NR SL slot for n'_NR, the value of Q may be a ceiling value of a value obtained by dividing the value of T_scal by the reference LTE SL reservation period value, and in the case where another NR SL slot is earlier than the location of the NR SL slot for n'_NR, the value of Q may be 1.

For example, an NR SL slot overlapping with a specific LTE SL subframe may be replaced with the latest NR SL slot belonging to an NR resource pool before the NR slot overlapping with the specific LTE SL subframe or the earliest NR SL slot belonging to an NR resource pool after the NR slot overlapping with the specific LTE SL subframe.

For example, in the case where the UE performs resource (re)selection, if a PSFCH occasion corresponding to a periodic resource (according to a transmission resource reservation period and/or a resource reselection counter value) for a candidate single-slot resource overlaps with an LTE SL reserved resource (derived based on LTE SL SCI reception) and/or overlaps with a selected LTE SL transmission resource (of an LTE SL module of the UE) and/or overlaps with an LTE SL resource associated with an LTE SL non-monitored subframe (of the LTE SL module of the UE), the UE may not include the candidate single-slot resource in a set of available resources and/or may avoid or deprioritize the candidate single-slot resource when selecting transmission resource(s). For example, the above operation may be applied only if an RSRP measurement value for the LTE SL reserved resource is equal to or greater than, or exceeds, a certain threshold value (an initial value is (pre-)configured, and/or the value is determined according to a priority value of the LTE SL reserved resource and/or a priority value of NR SL transmission of the UE), and/or if a priority value for the LTE SL reserved resource is equal to or less than, or below, a priority value for the PSFCH or a priority value of NR SL transmission, and/or if a priority value for the selected LTE SL transmission resource is equal to or less than, or below, a priority value for the PSFCH or a priority value of NR SL transmission, and/or if a priority value of NR SL transmission is equal to or greater than, or exceeds, a (pre-)configured threshold value, and/or if a priority value for the LTE SL reserved resource is equal to or less than, or below, a (pre-)configured threshold value, and/or if a priority value for the selected LTE SL transmission resource is equal to or less than, or below, a (pre-)configured threshold value. For example, the above operation may be applied only if a reference measurement value for an LTE SL resource associated with an LTE SL non-monitored subframe is equal to or greater than, or exceeds, a (pre-)configured threshold value. For example, the reference measurement value may be an RSSI measurement value for a region in which the UE operates reception for all or part of the LTE SL resource associated with the LTE SL non-monitored subframe.

For example, if PSFCH transmission overlaps with a selected LTE SL transmission resource (of an LTE SL module of the UE) and/or overlaps with an LTE SL resource associated with an LTE SL non-monitored subframe (of the LTE SL module of the UE), the UE may skip the PSFCH transmission. For example, the skipping of PSFCH transmission may be applied if there is no PSCCH/PSSCH transmission in the same slot and/or if PSCCH/PSSCH transmission exists and a power level of the PSCCH/PSSCH is lower than a total PSFCH power level at the time of the PSFCH transmission. For example, the above operation may be applied only if a priority value for the PSFCH is equal to or greater than, or exceeds, a priority value of the selected LTE SL transmission resource, and/or if a priority value for the PSFCH is equal to or greater than, or exceeds, a (pre-)configured threshold value, and/or if a priority value of the selected LTE SL transmission resource is equal to or less than, or below, a (pre-)configured threshold value.

For example, in the case of performing resource (re)selection, if a candidate single-slot resource and/or a periodic resource for the resource and/or a PSFCH occasion corresponding to the candidate single-slot resource and/or a PSFCH occasion corresponding to the periodic resource overlaps with a transmission resource and/or a reception resource for an LTE SLSS and/or an LTE PSBCH, the UE may exclude the candidate single-slot resource from a set of available resources and/or may avoid or deprioritize the candidate single-slot resource when the UE selects transmission resource(s). For example, the above operation may be applied if a transmission priority value for NR resource (re)selection is less than or equal to, or below, a priority value for LTE SLSS and/or LTE PSBCH transmission and/or reception. The reason for this is that LTE SLSS and/or LTE PSBCH transmission and/or reception may be skipped according to the mutual collision procedure. For example, the above operation may be applied if a transmission priority value for NR resource (re)selection is greater than or equal to, or exceeds, a priority value for LTE SLSS and/or LTE PSBCH transmission and/or reception. The reason for this is that the NR resource may be skipped in the above case. For example, in the case of the above operation, whether it is performed and how it is performed may differ depending on whether it is a transmission resource for LTE SLSS and/or LTE PSBCH or a reception resource. For example, the above operation may be applied only if a priority value for the LTE SLSS and/or the LTE PSBCH is less than or equal to, or below, a (pre-)configured first threshold value and/or greater than or equal to, or exceeds, a (pre-)configured second threshold value. For example, the above operation may be applied only if a reference measurement value for the LTE SLSS and/or the LTE PSBCH is greater than or equal to, or exceeds, a (pre-)configured threshold value. For example, the reference measurement value may be an RSRP measured by the UE based on previous LTE SLSS and/or LTE PSBCH DMRS reception and/or an RSSI value for an LTE SLSS and/or an LTE PSBCH subframe and/or a frequency domain.

For example, the NR SL module may use the information from the starting LTE SL subframe to the ending LTE SL subframe in the shared information from the LTE SL module. For example, the starting LTE SL subframe may be no later than the time (n-T_start). For example, n may be the time when the NR module triggers the NR SL resource (re)selection procedure. For example, selecting T_LTE or T_0 as T_start may be based on UE implementation. For example, T_0 may be as defined in Table 6. For example, T_LTE may be determined by the starting time of the LTE SL sensing window. For example, the ending LTE SL subframe may be no later than the time (n-T-T_valid2). For example, T_valid2 may be UE implementation with T_valid2 <= 4 ms. For example, n-T may be the time when the shared information is known by the NR SL module.

For example, the starting time of information for LTE SL resources used by the NR SL module may be determined based on a value between the value of T_0 and the value of T_LTE, and/or a maximum value and/or a minimum value and/or an average value of the values. In the embodiment(s) of the present disclosure, the value of T_0 may be applied by being replaced with a specific value of an NR SL sensing window size (e.g., the number of logical slots/offset value converted based on 1100 msec).

For example, if a PSFCH occasion associated with an NR SL candidate resource overlaps with an LTE SL reserved resource, an NR SL module may exclude the NR SL candidate resource from a set of available resources. For example, the above operation may be applied only if HARQ-ACK feedback is enabled for SL transmission for resource (re)selection of the NR SL module, or if the SL transmission is configured with a logical channel for which HARQ-ACK feedback is enabled. For example, the above operation may be applied in step 5 (of Table 7) in the resource (re)selection operation (i.e., after an initial available resource set is determined, determining resources excluded from the initial available resource set), and/or the above operation may be applied only if an RSRP measurement value for the overlapping LTE SL reserved resource among the NR SL candidate resource(s) is equal to or greater than, or exceeds, a specific threshold value.

Herein, for example, in the case of the specific threshold value, an initial value may be (pre-)configured for each transmission NR priority (e.g., transmission priority for resource (re)selection) and/or reception LTE priority (e.g., priority of the LTE SL reserved resource), and/or boosting may be applied based on the amount of available resources. For example, the NR SL candidate resource(s) may be selected in whole or in part based on UE implementation.

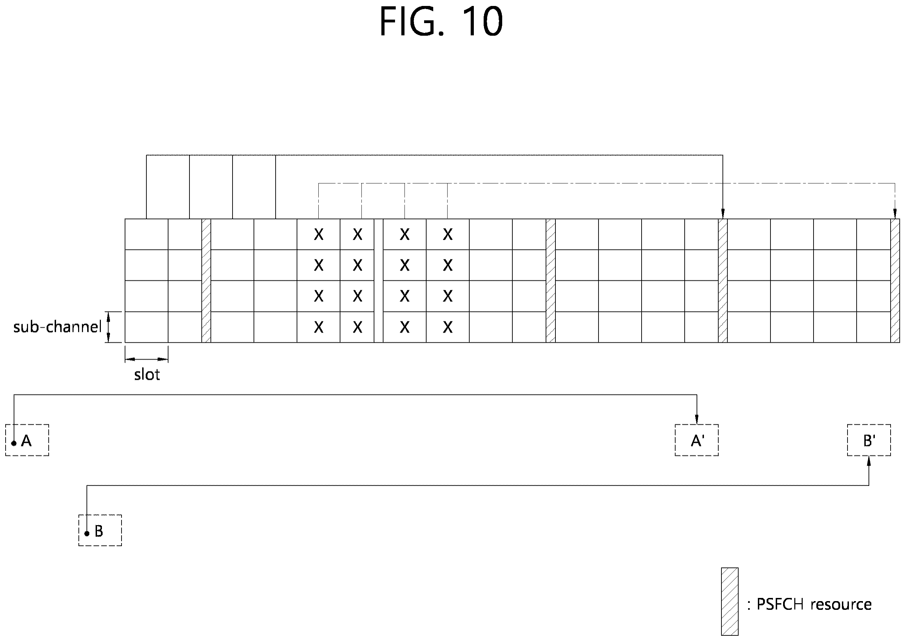

FIG. 10 shows a method for excluding resource(s) based on an LTE reserved resource overlapping with a PSFCH occasion and an RSRP threshold value, based on an embodiment of the present disclosure. The embodiment of FIG. 10 may be combined with various embodiments of the present disclosure.

Referring to FIG. 10, the UE may monitor LTE SCI on LTE subframe A, and may detect a resource reservation on LTE subframe A'. Furthermore, the UE may monitor LTE SCI on LTE subframe B, and may detect a resource reservation on LTE subframe B'. In the embodiment of FIG. 10, it is assumed that subframes A' and B' overlap with NR PSFCH occasions in a time domain, and that an RSRP measured on subframe A is not greater than an RSRP threshold value, and that an RSRP measured on subframe B is greater than an RSRP threshold value. In this case, the UE may exclude resources associated with a PSFCH occasion overlapping with LTE subframe B' from an available resource set, and may not exclude resources associated with a PSFCH occasion overlapping with LTE subframe A' from an available resource set. In this case, since the resource exclusion operation is performed in step 5 of Table 7, boosting for the RSRP threshold value may not be allowed/performed. Herein, for example, the RSRP threshold value may be determined based on a transmission NR priority (e.g., transmission priority for resource (re)selection) and/or a reception LTE priority (e.g., priority of an LTE SL reserved resource).

For example, the above operation may be applied only if a priority value for the overlapping LTE SL reserved resource is less than or equal to, or below, a (pre-)configured threshold value, and/or if a priority value for the overlapping LTE SL reserved resource is less than or equal to, below, a transmission priority value for NR SL resource (re-)selection, and/or if a transmission priority value for NR SL resource (re-)selection is less than or equal to, or below, a (pre-)configured threshold value, and/or if a transmission priority value for NR SL resource (re-)selection is greater than or equal to, or exceeds, a (pre-)configured threshold value, and/or if a priority for the overlapping LTE SL reserved resource is less than or equal to, or below, a (pre-)configured threshold value and an RSRP measurement value for the overlapping LTE SL reserved resource is greater than or equal to, or exceeds, a specific RSRP threshold value, and/or if a priority value for the overlapping LTE SL reserved resource is greater than or equal to, or exceeds, a transmission priority value for NR SL resource (re-)selection and an RSRP measurement value for the overlapping LTE SL reserved resource is greater than or equal to, or exceeds, a specific RSRP threshold value.

For example, for a selected resource of the UE, if the selected resource overlaps with an LTE SL reserved resource derived based on received LTE SCI of an LTE module and/or if a PSFCH occasion corresponding to the selected resource overlaps (in time) with an LTE SL reserved resource derived based on received LTE SCI of an LTE module and/or if an RSRP measurement value for the LTE SL reserved resource is equal to or greater than, or exceeds, an (initial or final) RSRP threshold value and/or if a condition is satisfied between an NR priority value of the UE and a priority value for the LTE SL reserved resource, pre-emption for the resource may be reported to a higher layer. For example, in the condition for the priority value for the LTE SL reserved resource, if the priority for the LTE SL reserved resource is less than a specific priority threshold value, the specific priority threshold value may be (pre-)configured separately from that for the NR SL reserved resource.

For example, in the case of performing resource (re)selection, if PSFCH resources are (pre-)configured in a resource pool for resource (re)selection, and/or if at least one of available logical channels at the time when the UE triggers resource (re)selection or generates a SL grant is associated/corresponding to AN (ACK/NACK) enabled, and/or if at least one of logical channels of a service that the UE is interested in is associated/corresponding to AN enabled, and/or if a PSFCH occasion corresponding to an NR candidate resource overlaps (in time) with an LTE SL resource, and/or if an RSRP measurement value for an LTE reserved resource is equal to or greater than, or exceeds, an RSRP threshold value, the UE may apply/perform an operation of excluding the NR candidate resource based thereon from an available resource set. That is, the UE may perform the resource (re)selection procedure for the overlap between the PSFCH occasion and the LTE SL resource even if the only logical channel available for data at the time of SL grant generation is for AN disabled.

Meanwhile, in the case of performing resource reselection for initial transmission and/or retransmission, the UE may be aware of whether SL HARQ-ACK feedback is enabled or disabled.

For example, in the case of performing resource reselection for initial transmission and/or retransmission, and/or if the UE is aware of SL HARQ-ACK feedback disabled for the transmission and a transmission resource, the UE may not apply the available resource set determination method based on the PSFCH occasion corresponding to the NR candidate resource overlapping with the LTE SL resource (in time).

For example, in the case of performing resource reselection for initial transmission and/or retransmission, and/or if the UE is aware of SL HARQ-ACK feedback enabled for the transmission and a transmission resource, the UE may apply the available resource set determination method based on the PSFCH occasion corresponding to the NR candidate resource overlapping with the LTE SL resource (in time).

For example, being aware of enabling SL HARQ-ACK feedback for the transmission and the transmission resource, or a timing thereof, may be after generating a TB or a SL grant and/or after performing a part of transmission (e.g., initial transmission).

The embodiment(s) of the present disclosure may be applied differently based on an SCS for NR SL.

In the embodiment(s) of the present disclosure, a logical subframe index may be a re-indexed index for a set of subframes belonging to a resource pool.

In the embodiment(s) of the present disclosure, a logical slot index may be a re-indexed index for a set of slots belonging to a resource pool.

While the embodiment(s) of the present disclosure has described a method of considering the LTE SL reserved resource when selecting the NR SL resource, the concept of the present disclosure can be extended and applied to a method of considering the NR SL reserved resource when selecting the LTE SL resource.

While the embodiment(s) of the present disclosure has described a case where LTE SL and NR SL operate simultaneously on the same carrier, the concepts of the present disclosure can be extended and applied to a case where other RAT-based SL or V2X and NR SL operate simultaneously, or a case where NR SLs using different transmission parameters (e.g., SCS and/or subcarrier offset and/or DC location, etc.) operate simultaneously.

In the embodiment(s) of the present disclosure, for NR SL operation, the resource selection procedure may include resource reselection and/or pre-emption operation. Alternatively, the UE may select different methods for resource selection, resource reselection, and/or pre-emption among the above embodiments.

The embodiment(s) of the present disclosure may be applied in the form of the combination differently for each SL carrier and/or for each SL band and/or for each SL carrier aggregation combination and/or based on the SL band combination. The embodiment(s) of the present disclosure may be applied in the form of the combination differently based on a type of carrier aggregation (e.g., contiguous or non-contiguous and/or intra-band or inter-band).

The embodiment(s) of the present disclosure may be different and/or (pre-)configured per resource pool and/or per transmission outside and/or within a resource pool and/or per QoS parameter and/or per CAPC and/or per SL priority and/or per SL channel type and/or per SL BWP and/or per SL carrier and/or per congestion control level and/or per transmission operation or reception operation and/or per transmit power level and/or per transmission start time and/or per cast type and/or per SL HARQ-ACK feedback enabled or disabled and/or per HARQ-ACK feedback option and/or per number of transmission attempts for the same information or TB. In the embodiment(s) of the present disclosure, (pre-) configuration may be performed per resource pool and/or per transmission outside and/or within a resource pool and/or per QoS parameter and/or per SL priority and/or per SL channel type and/or per SL BWP and/or per SL carrier and/or per congestion control level and/or per transmission operation or reception operation and/or per transmit power level and/or per transmission start time and/or per cast type and/or per SL HARQ-ACK feedback enabled or disabled and/or per HARQ-ACK feedback option and/or per number of transmission attempts for the same information or TB.

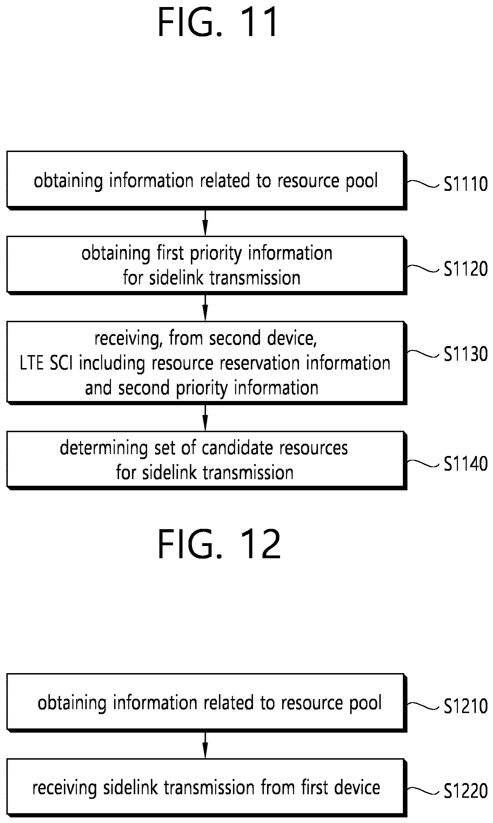

FIG. 11 shows a method for a first device to perform wireless communication, based on an embodiment of the present disclosure. The embodiment of FIG. 11 may be combined with various embodiments of the present disclosure.

Referring to FIG. 11, in step S1110, the first device may obtain information related to a resource pool. In step S1120, the first device may obtain first priority information for sidelink transmission. In step S1130, the first device may receive, from a second device, long term evolution (LTE) sidelink control information (SCI) including resource reservation information and second priority information. In step S1140, the first device may determine a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

For example, the first priority information may be priority information for NR sidelink communication, and the second priority information may be priority information for LTE sidelink communication.

For example, the PSFCH slot may overlap in a time domain with the LTE subframe determined based on the resource reservation information.

For example, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot may be included in the set of candidate resources for the sidelink transmission.

For example, boosting of the RSRP threshold may not be allowed.

For example, based on a number of candidate resources remaining in the set of candidate resources being less than a threshold, the RSRP threshold may not be increased.

For example, periodic reserved resources related to the LTE SCI may be determined based on the resource reservation information and a value of Q. Additionally, for example, the first device may determine a selection window based on a remaining packet delay budget related to the sidelink transmission. For example, the value of Q may be obtained based on a value obtained by dividing a size of the selection window by a product of the resource reservation information and 100. For example, a number of the periodic reserved resources related to the LTE SCI may be Q.

Additionally, for example, the first device may select a resource for physical sidelink control channel (PSCCH) transmission and physical sidelink shared channel (PSSCH) transmission from the set of candidate resources.

The proposed method can be applied to devices based on various embodiments of the present disclosure. First, the processor 102 of the first device 100 may obtain information related to a resource pool. In addition, the processor 102 of the first device 100 may obtain first priority information for sidelink transmission. In addition, the processor 102 of the first device 100 may control the transceiver 106 to receive, from a second device, long term evolution (LTE) sidelink control information (SCI) including resource reservation information and second priority information. In addition, the processor 102 of the first device 100 may determine a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

For example, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot may be included in the set of candidate resources for the sidelink transmission.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

For example, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot may be included in the set of candidate resources for the sidelink transmission.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

For example, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot may be included in the set of candidate resources for the sidelink transmission.

Based on an embodiment of the present disclosure, a non-transitory computer-readable storage medium storing instructions may be provided. For example, the instructions, when executed, may cause a first device to perform operations comprising: obtaining information related to a resource pool; obtaining first priority information for sidelink transmission; receiving, from a second device, long term evolution (LTE) sidelink control information (SCI) including resource reservation information and second priority information; and determining a set of candidate resources for the sidelink transmission. For example, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot may be excluded from the set of candidate resources for the sidelink transmission.

For example, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot may be included in the set of candidate resources for the sidelink transmission.

FIG. 12 shows a method for a second device to perform wireless communication, based on an embodiment of the present disclosure. The embodiment of FIG. 12 may be combined with various embodiments of the present disclosure.

Referring to FIG. 12, in step S1210, the second device may obtain information related to a resource pool. In step S1220, the second device may receive sidelink transmission from a first device. For example, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot may be excluded from a set of candidate resources for the sidelink transmission.

The proposed method can be applied to devices based on various embodiments of the present disclosure. First, the processor 202 of the second device 200 may obtain information related to a resource pool. In addition, the processor 202 of the second device 200 may control the transceiver 206 to receive sidelink transmission from a first device. For example, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot may be excluded from a set of candidate resources for the sidelink transmission.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: obtaining information related to a resource pool; and receiving sidelink transmission from a first device. For example, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot may be excluded from a set of candidate resources for the sidelink transmission.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: obtaining information related to a resource pool; and receiving sidelink transmission from a first device. For example, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot may be excluded from a set of candidate resources for the sidelink transmission.

Based on an embodiment of the present disclosure, a non-transitory computer-readable storage medium storing instructions may be provided. For example, the instructions, when executed, may cause a second device to perform operations comprising: obtaining information related to a resource pool; and receiving sidelink transmission from a first device. For example, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot may be excluded from a set of candidate resources for the sidelink transmission.

Based on various embodiments of the present disclosure, if an LTE SL reserved resource and a PSFCH resource overlap in time, whether to exclude all NR candidate resources associated with the PSFCH from available resources may be determined based on an RSRP measurement value. Herein, since the corresponding operation is performed in step 5 of Table 7, an RSRP threshold value may not change. Furthermore, periodic LTE SL resources may be derived based on a value of Q obtained based on a size of a selection window. This can solve the problem of insufficient available resources caused by excluding all NR candidate resources associated with the PSFCH from the available resources if the LTE SL reserved resource and the PSFCH resource overlap in time. In addition, by not allowing an increase in the RSRP threshold value, an additional AGC problem caused by overlap between the LTE SL transmission and the PSFCH can be solved. Furthermore, by obtaining the value of Q based on the size of the selection window, the problem of unnecessarily reducing available resources due to deriving periodic LTE SL resources based on a large Q value can be solved. Therefore, in a situation where NR SL and LTE SL coexist, an additional AGC problem on an LTE SL side can be mitigated, and the UE can efficiently select NR SL resource(s).

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

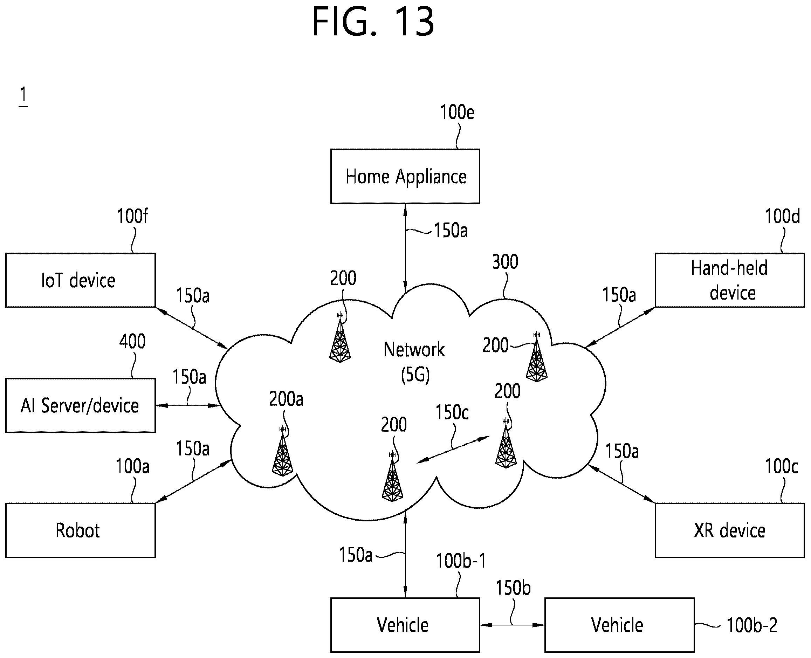

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

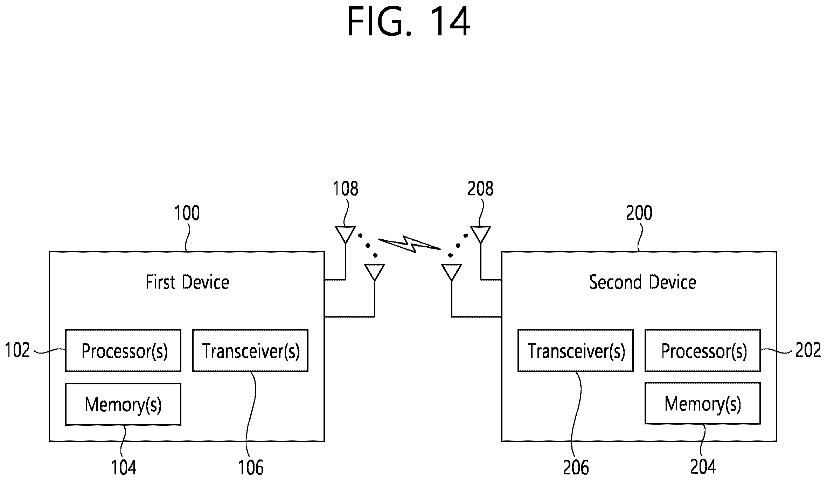

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

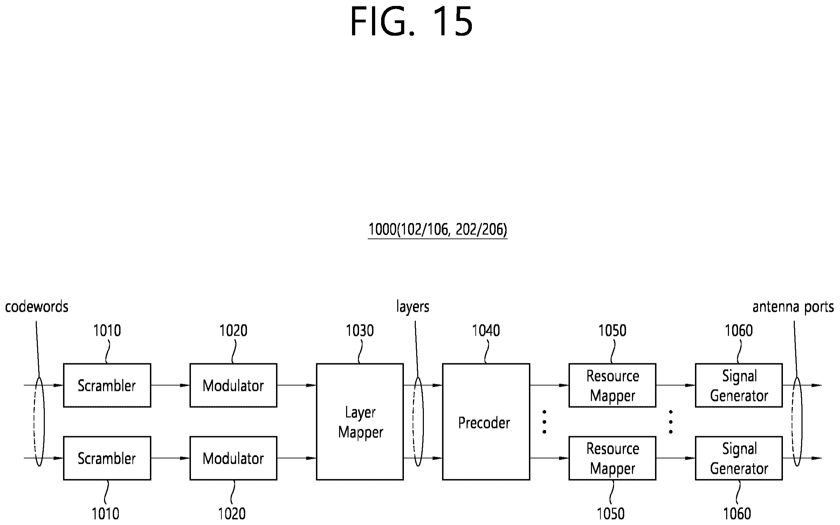

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

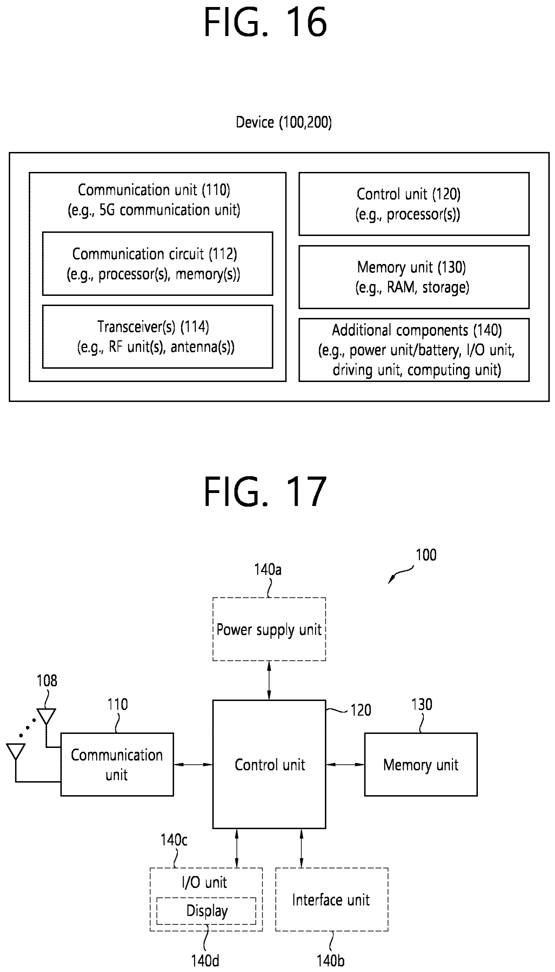

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

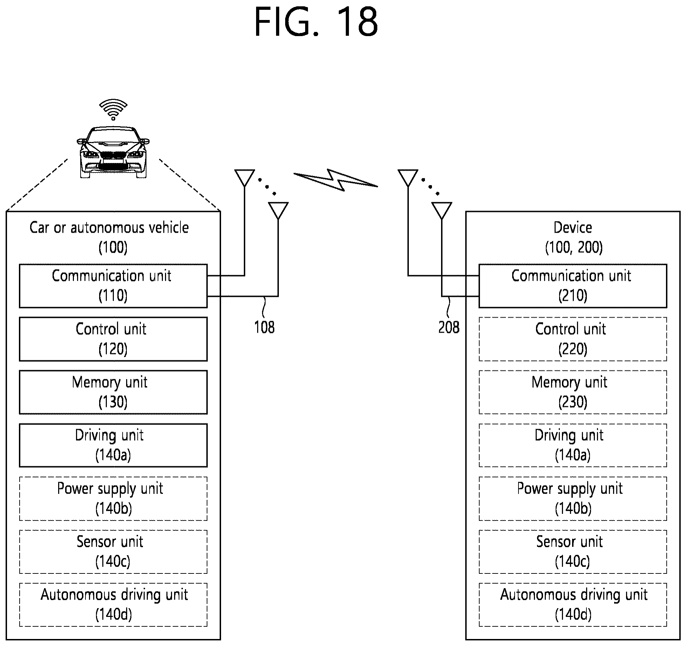

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:

   obtaining information related to a resource pool;
   obtaining first priority information for sidelink transmission;
   receiving, from a second device, long term evolution (LTE) sidelink control information (SCI) including resource reservation information and second priority information; and
   determining a set of candidate resources for the sidelink transmission,
   wherein, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot is excluded from the set of candidate resources for the sidelink transmission.

2. The method of claim 1, wherein the first priority information is priority information for NR sidelink communication, and the second priority information is priority information for LTE sidelink communication.

3. The method of claim 1, wherein the PSFCH slot overlaps in a time domain with the LTE subframe determined based on the resource reservation information.

4. The method of claim 1, wherein, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot is included in the set of candidate resources for the sidelink transmission.

5. The method of claim 1, wherein boosting of the RSRP threshold is not allowed.

6. The method of claim 1, wherein, based on a number of candidate resources remaining in the set of candidate resources being less than a threshold, the RSRP threshold is not increased.

7. The method of claim 1, wherein periodic reserved resources related to the LTE SCI are determined based on the resource reservation information and a value of Q.

8. The method of claim 7, further comprising:
   determining a selection window based on a remaining packet delay budget related to the sidelink transmission.

9. The method of claim 8, wherein the value of Q is obtained based on a value obtained by dividing a size of the selection window by a product of the resource reservation information and 100.

10. The method of claim 9, wherein a number of the periodic reserved resources related to the LTE SCI is Q.

11. The method of claim 1, further comprising:
selecting a resource for physical sidelink control channel (PSCCH) transmission and physical sidelink shared channel (PSSCH) transmission from the set of candidate resources.

12. A first device adapted to perform wireless communication, the first device comprising:

at least one transceiver;
at least one processor; and
at least one memory connected to the at least one processor and storing instructions that, based on being executed by the at least one processor, cause the first device to perform operations comprising:

obtaining information related to a resource pool;
obtaining first priority information for sidelink transmission;
receiving, from a second device, long term evolution (LTE) sidelink control information (SCI) including resource reservation information and second priority information; and
determining a set of candidate resources for the sidelink transmission,
wherein, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot is excluded from the set of candidate resources for the sidelink transmission.

13. The first device of claim 12, wherein, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot is included in the set of candidate resources for the sidelink transmission.

14. A processing device adapted to control a first device, the processing device comprising:

at least one processor; and
at least one memory connected to the at least one processor and storing instructions that, based on being executed by the at least one processor, cause the first device to perform operations comprising:

obtaining information related to a resource pool;
obtaining first priority information for sidelink transmission;
receiving, from a second device, long term evolution (LTE) sidelink control information (SCI) including resource reservation information and second priority information; and
determining a set of candidate resources for the sidelink transmission,
wherein, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot is excluded from the set of candidate resources for the sidelink transmission.

15. The processing device of claim 14, wherein, based on that (i) the resource pool is configured with the PSFCH resource, (ii) the LTE RSRP value measured based on the LTE SCI is not higher than the RSRP threshold determined based on the first priority information and the second priority information, and (iii) the PSFCH slot overlaps with the LTE subframe determined based on the resource reservation information, the candidate resource related to the PSFCH slot is included in the set of candidate resources for the sidelink transmission.

16. A non-transitory computer-readable storage medium storing instructions that, when executed, cause a first device to perform operations comprising:

  obtaining information related to a resource pool;
  obtaining first priority information for sidelink transmission;
  receiving, from a second device, long term evolution (LTE) sidelink control information (SCI) including resource reservation information and second priority information; and
  determining a set of candidate resources for the sidelink transmission,
  wherein, based on that (i) the resource pool is configured with a physical sidelink feedback channel (PSFCH) resource, (ii) an LTE reference signal received power (RSRP) value measured based on the LTE SCI is higher than an RSRP threshold determined based on the first priority information and the second priority information, and (iii) a PSFCH slot overlaps with an LTE subframe determined based on the resource reservation information, a candidate resource related to the PSFCH slot is excluded from the set of candidate resources for the sidelink transmission.

17. A method for performing wireless communication by a second device, the method comprising:

  obtaining information related to a resource pool; and
  receiving sidelink transmission from a first device,
  wherein, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot is excluded from a set of candidate resources for the sidelink transmission.

18. A second device adapted to perform wireless communication, the second device comprising:

  at least one transceiver;
  at least one processor; and
  at least one memory connected to the at least one processor and storing instructions that, based on being executed by the at least one processor, cause the second device to perform operations comprising:

    obtaining information related to a resource pool; and
    receiving sidelink transmission from a first device,
    wherein, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot is excluded from a set of candidate resources for the sidelink transmission.

19. A processing device adapted to control a second device, the processing device comprising:

  at least one processor; and
  at least one memory connected to the at least one processor and storing instructions that, based on being executed by the at least one processor, cause the second device to perform operations comprising:

    obtaining information related to a resource pool; and
    receiving sidelink transmission from a first device,
    wherein, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot is excluded from a set of candidate resources for the sidelink transmission.

20. A non-transitory computer-readable storage medium storing instructions that, when executed, cause a second device to perform operations comprising:

obtaining information related to a resource pool; and

receiving sidelink transmission from a first device,

wherein, based on that (i) the resource pool is configured with a physical sidelink feedback channel (PSFCH) resource, (ii) a long term evolution (LTE) reference signal received power (RSRP) value measured based on LTE sidelink control information (SCI) including resource reservation information and second priority information is higher than an RSRP threshold determined based on first priority information for the sidelink transmission and the second priority information, and (iii) a PSFCH slot overlaps with an LTE subframe determined based on the resource reservation information, a candidate resource related to the PSFCH slot is excluded from a set of candidate resources for the sidelink transmission.

# FIG. 1

Touch
Smell
Five Senses
Taste
Hear
Sight

sCell-APs
sCell-UE
sCell-UE
Dense sCell-RAN
sCell-APs
sCell-APs
sCell-UE

Drone network

M2M & M2H comunication

Ground/satellite integration

eHealth remote monitoring

3D virtual cordination
virtual remote assistance
New virtual world
3D Story virtualization
3D gaming
MR
AR
M-UE
M-UE

BCI and AI

SDN

Robotics & automation

UM MIMO BS

FSO communication

UAV BS
UM-MIMO BS
FSO backhaul

UE
UAV Controller
UAV network

VLC
VR

Smart City

Smart Home

Underwater communication

VLC
Autonomous vehicle

EP 4 697 843 A1

# FIG. 2

| | | | | | | | | |
|---|---|---|---|---|---|---|---|---|
| Radio | Microwave | | Infrared | Visible | Ultraviolet | X-Ray | Gamma-Ray | |

mmWave | Terahertz

Wavelength  $10^8$ m  1m  10mm  1mm  0.1mm  700nm  390nm  10nm  0.01nm

Radiation Type

Frequency  3 Hz  300 MHz  30 GHz  300 GHz  3 THz  430 THz  730 THz  30 PHz  30 EHz

Mega : $10^6$   Giga : $10^9$   Tera : $10^{12}$   Peta : $10^{15}$   Exa : $10^{18}$

EP 4 697 843 A1

# FIG. 3

Satellite
(or UAS platform)

Service link

Feeder link

Data network

Gateway

User Equipments

Beam foot print

Field of view of the satellite
(or UAS platform)

EP 4 697 843 A1

# FIG. 4

Satellite (or UAS platform)

Satellite (or UAS platform)

ISL

Feeder link

Feeder link (mandatory if on ISL)

Gateway

Data network

Service link

Beam foot print

User Equipments

Field of view of the satellite (or UAS platform)

# FIG. 5

(a)

(b)

EP 4 697 843 A1

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 697 843 A1

# FIG. 7

PRB N3

PRB 1

PRB 0

$N_{BWP, 2}^{size}$

PRB N2

PRB 1

PRB 0

$N_{BWP, 1}^{size}$

Carrier Bandwidth

PRB N1

PRB 1

PRB 0

$N_{BWP, 0}^{size}$

$N_{BWP, 2}^{start}$

$N_{BWP, 1}^{start}$

CRB 0

$N_{BWP, 0}^{start}$

Freq.

Time

PRB 0 (Point A) in reference resource block

# FIG. 8

| BS | first UE | second UE | first UE | second UE |
|----|----------|-----------|----------|-----------|

resource scheduling — S800

PSCCH — S810

PSSCH — S820

PSFCH — S830

PUCCH/PUSCH — S840

PSCCH — S810

PSSCH — S820

PSFCH — S830

(a)

(b)

# FIG. 9

Legend:
□ : NR slot   ▨ : PSFCH resource
⬚ : LTE subframe

# FIG. 10

sub-channel

slot

A

B

A'

B'

: PSFCH resource

EP 4 697 843 A1

# FIG. 11

| obtaining information related to resource pool | ~ S1110 |

| obtaining first priority information<br>for sidelink transmission | ~ S1120 |

| receiving, from second device,<br>LTE SCI including resource reservation information<br>and second priority information | ~ S1130 |

| determining set of candidate resources<br>for sidelink transmission | ~ S1140 |

# FIG. 12

| obtaining information related to resource pool | ~ S1210 |

| receiving sidelink transmission from first device | ~ S1220 |

# FIG. 13

# FIG. 14

EP 4 697 843 A1

# FIG. 15

1000(102/106, 202/206)

codewords → [Scrambler 1010] → [Modulator 1020] → [Layer Mapper 1030] → layers → [Precoder 1040] → [Resource Mapper 1050] → [Signal Generator 1060] → antenna ports

[Scrambler 1010] → [Modulator 1020] → [Layer Mapper 1030] → [Precoder 1040] → [Resource Mapper 1050] → [Signal Generator 1060]

EP 4 697 843 A1

# FIG. 16

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 17

# FIG. 18

Car or autonomous vehicle
(100)

Communication unit
(110)

Control unit
(120)

Memory unit
(130)

Driving unit
(140a)

Power supply unit
(140b)

Sensor unit
(140c)

Autonomous driving unit
(140d)

108

208

Device
(100, 200)

Communication unit
(210)

Control unit
(220)

Memory unit
(230)

Driving unit
(140a)

Power supply unit
(140b)

Sensor unit
(140c)

Autonomous driving unit
(140d)

EP 4 697 843 A1

**EP 4 697 843 A1**

## INTERNATIONAL SEARCH REPORT

International application No.

**PCT/KR2024/095707**

| A. | CLASSIFICATION OF SUBJECT MATTER |
|---|---|

**H04W 72/53**(2023.01)i; **H04W 72/12**(2009.01)i; **H04W 72/02**(2009.01)i; **H04W 72/04**(2009.01)i; **H04W 72/25**(2023.01)i; **H04W 72/542**(2023.01)i; **H04W 72/56**(2023.01)i; **H04W 28/26**(2009.01)i; **H04L 27/26**(2006.01)i; **H04W 4/40**(2018.01)i

According to International Patent Classification (IPC) or to both national classification and IPC

| B. | FIELDS SEARCHED |
|---|---|

Minimum documentation searched (classification system followed by classification symbols)

H04W 72/53(2023.01); H04W 28/26(2009.01); H04W 4/40(2018.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: resource pool, sidelink, priority, resource reservation, LTE SCI, candidate resource set, PSFCH, LTE RSRP, RSRP threshold, overlap, LTE subframe, exclude, boosting, Q value, periodic, remaining PDB, selection window, PSCCH, PSSCH

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | SPREADTRUM COMMUNICATIONS. Discussion on Co-channel coexistence for LTE sidelink and NR sidelink. R1-2302603, 3GPP TSG RAN WG1 #112b, e-Meeting. 07 April 2023.<br>See sections 2.1 and 2.4.2. | 1-3,5,7,11-12,14,16-20<br>4,6,8-10,13,15 |
| Y | VIVO. Co-channel coexistence for LTE sidelink and NR sidelink. R1-2300455, 3GPP TSG RAN WG1 #112. Athens, Greece. 17 February 2023.<br>See sections 2 and 4. | 4,13,15 |
| Y | US 2020-0280961 A1 (LG ELECTRONICS INC.) 03 September 2020 (2020-09-03)<br>See paragraphs [0501]-[0505]. | 6 |
| Y | WO 2023-055102 A1 (SAMSUNG ELECTRONICS CO., LTD.) 06 April 2023 (2023-04-06)<br>See claims 1-5. | 8-10 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 July 2024** | **15 July 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/095707** |

| C. | DOCUMENTS CONSIDERED TO BE RELEVANT | |
|---|---|---|
| Category* | Citation of document, with indication, where appropriate, of the relevant passages | Relevant to claim No. |
| A | US 2022-0086700 A1 (QUALCOMM INCORPORATED) 17 March 2022 (2022-03-17)<br>See paragraphs [0029]-[0082]; claims 1, 4, 9 and 17; and figure 6. | 1-20 |

Form PCT/ISA/210 (second sheet) (July 2022)

| INTERNATIONAL SEARCH REPORT | International application No. |
| Information on patent family members | **PCT/KR2024/095707** |

| Patent document cited in search report | | | Publication date (day/month/year) | Patent family member(s) | | | Publication date (day/month/year) |
|---|---|---|---|---|---|---|---|
| US | 2020-0280961 | A1 | 03 September 2020 | CN | 111149397 | A | 12 May 2020 |
| | | | | CN | 111149397 | B | 29 September 2023 |
| | | | | EP | 3672338 | A1 | 24 June 2020 |
| | | | | EP | 3672338 | B1 | 30 November 2022 |
| | | | | US | 11317382 | B2 | 26 April 2022 |
| | | | | WO | 2019-066629 | A1 | 04 April 2019 |
| WO | 2023-055102 | A1 | 06 April 2023 | CN | 115942467 | A | 07 April 2023 |
| | | | | KR | 10-2024-0065178 | A | 14 May 2024 |
| US | 2022-0086700 | A1 | 17 March 2022 | CN | 116018861 | A | 25 April 2023 |
| | | | | EP | 4211953 | A1 | 19 July 2023 |
| | | | | US | 11627501 | B2 | 11 April 2023 |
| | | | | US | 2023-0319648 | A1 | 05 October 2023 |
| | | | | WO | 2022-055659 | A1 | 17 March 2022 |

Form PCT/ISA/210 (patent family annex) (July 2022)